# EUROPÄISCHE PATENTSCHRIFT

(11) **EP 1 624 295 B1**
(45) Veröffentlichungstag und Bekanntmachung des Hinweises auf die Patenterteilung: **10.10.2007**
(21) Anmeldenummer: 04103729.2
(22) Anmeldetag: 03.08.2004
(51) Int. Cl.: G01N 1/22, G01N 33/00

(54) **Sensoreinrichtung zur Bestimmung von Bestandteilen eines strömenden Mediums**
Sensor device for the determination of components in a flowing media
Capteur pour la détermination de composants dans un milieu fluide

(43) Veröffentlichungstag der Anmeldung: 08.02.2006
(73) Patentinhaber: Siemens Schweiz AG, 8047 Zürich (CH)
(72) Erfinder: Lüthi, Yves, 5630, Muri (CH); Zito, Ivan, 5406, Baden (CH)
(74) Vertreter: Berg, Peter

(56) Entgegenhaltungen:
- EP-A- 0 259 093
- DE-A- 4 430 378
- DE-A- 19 642 146
- US-A- 4 339 318
- US-A- 6 015 533

## Beschreibung

Die im folgenden beschriebenen Ausführungsbeispiele betreffen eine Einrichtung mit einem Sensor zur Bestimmung von einem oder mehreren Bestandteilen eines strömenden Mediums.

Sensoren sind von einer Vielzahl von Ausführungen bekannt und kommen in einer Vielzahl von Anwendungen vor. Gassensoren kommen beispielsweise in Gefahrenmeldeanlagen und Heizungs-, Lüftungs- und Klimaanlagen zur Anwendung. Die Produktbeschreibung "CO₂/VOC Sensors QPA63..." der Siemens Building Technologies AG, Dokumentnummer CM1N1958E vom 5. Dezember 2002, beschreibt CO₂ und VOC Sensoren (VOC: volatile organic compounds) zur Bestimmung der Luftqualität in Räumen und Lüftungskanälen. Diese Sensoren sind in einem Gehäuse untergebracht, das für die Bestimmung der Luftqualität in einem Raum an einer Innenwand montiert werden kann. Das Gehäuse hat mindestens eine Öffnung, durch die Luft ins Gehäuseinnere gelangt.

Für die Bestimmung der Luftqualität in einem Lüftungskanal ist das Gehäuse mit einem Rohr zu erweitern, das in den Lüftungskanal ragt. Das Rohr führt durch eine Öffnung die im Lüftungskanal strömende Luft den im Gehäuse angeordneten Sensoren zur Messung zu. Dazu hat das Rohr einen Zuflusskanal, der die Luft aus dem Lüftungskanal ins Gehäuseinnere führt, und einen Abflusskanal, der die Luft vom Gehäuseinneren in den Lüftungskanal abführt. Der Zuflusskanal und der Abflusskanal sind durch eine Trennwand getrennt. An einem dem Gehäuse abgewandten Ende ist das Rohr verschlossen. Die Rohrwand hat aber nahe dem verschlossenen Ende drei übereinander angeordnete Öffnungen, so dass die Luft in den Zuflusskanal strömen kann. Am gleichen Ende des Rohres hat der Abflusskanal eine keilförmige Öffnung durch die Luft aus dem Abflusskanal zurück in den Lüftungskanal entweichen kann. Die keilförmige Öffnung reicht bis zum Ende des Rohres.

Die genannte Produktbeschreibung weist für die Messung in einem Lüftungskanal darauf hin, dass der Sensor mit montiertem Rohr so auszurichten ist, das die Öffnungen des Zuflusskanals entgegen der Luftströmung gerichtet sind. Die auf das Rohr zuströmende Luft kann so durch die Öffnungen in den Zuflusskanal strömen. Diese Anweisung zur Montage kann unter Umständen einschränkend sein und einen erhöhten Zeitaufwand erfordern.

Eine Einrichtung der im Oberbegriff des Anspruchs 1 genanten Art ist aus EP 0 259 093 A2 bekannt.

Ferner wird in DE 196 42 146 A eine Messsonde zur Probeentnahme in gasförmigen oder flüssigen Medien vorgeschlagen. Die Messsonde verfügt über ein Messrohr mit einem offenen Ende, durch welches mehrere Entnahmeteilsektoren in das zu analysierende Medium hineinragen.

Ein Aspekt der im folgenden beschriebenen Ausführungsbeispiele betrifft daher eine Einrichtung mit einem Sensor, bei der mehr Flexibilität in der Ausrichtung mit Bezug auf die Strömung in einem Kanal gegeben ist. Eine solche Einrichtung hat mindestens einen Sensor zur Bestimmung von einem oder mehreren Bestandteilen eines in einem Installationskanal strömenden Mediums. Die Einrichtung hat ein Gehäuse und einen damit verbundenen Hauptkanal, der an einem dem Gehäuse abgewandten Ende geschlossen ist. Der Hauptkanal hat einen ersten Kanal und einen zweiten Kanal, der durch eine erste Trennwand vom ersten Kanal getrennt ist. Der Hauptkanal hat ausserdem mindestens eine vom Ende entfernte erste Öffnung, die eine erste Verbindung zwischen dem ersten Kanal und dem Installationskanal schafft, und mindestens eine zweite vom Ende entfernte Öffnung, die eine zweite Verbindung zwischen dem zweiten Kanal und dem Installationskanal schafft, so dass das Medium zwischen den Öffnungen, durch die Kanäle und am Sensor vorbei strömt.

Diese und andere Aspekte, Vorteile und neue Merkmale der im folgenden beschriebenen Ausführungsbeispiele werden in der nachfolgenden detaillierten Beschreibung mit Bezug auf die Zeichnungen erläutert. In den Zeichnungen haben gleiche Elemente die gleichen Bezugszeichen.
Figur 1 zeigt schematisch einen beispielhaften Aufbau einer Einrichtung mit einem Sensor zur Bestimmung von einem oder mehreren Bestandteilen eines strömenden Mediums,
Figur 2 illustriert beispielhafte Strömungsverläufe durch die Einrichtung gemäss Figur 1,
Figur 3 zeigt schematisch einen Querschnitt eines Hauptkanals welcher jedoch nicht Teil der vorliegenden Erfindung ist.
Figur 4 zeigt schematisch einen Querschnitt eines Hauptkanals welcher jedoch nicht Teil der vorliegenden Erfindung ist.
Figur 5 zeigt schematisch einen Querschnitt durch ein Ausführungsbeispiel eines Hauptkanals der Einrichtung.

Die Beschreibung von verschiedenen Ausführungsbeispielen einer Einrichtung mit einem Sensor zur Bestimmung von einem Bestandteil eines strömenden Mediums erfolgt im folgenden mit Bezug auf einen Gassensor und auf eine Anwendung in Heizungs-, Lüftungs- und Klimaanlagen. Der Fachmann wird jedoch erkennen, dass die Merkmale der Einrichtung generell in jedem System zur Anwendung kommen können, bei dem ein strömendes Medium (gasförmig oder flüssig) auf einen Sensor zu leiten ist, wie z. B. in einer Verbrennungsanlage, einer chemischen Prozessanlage und einer Wasseraufbereitungsanlage.

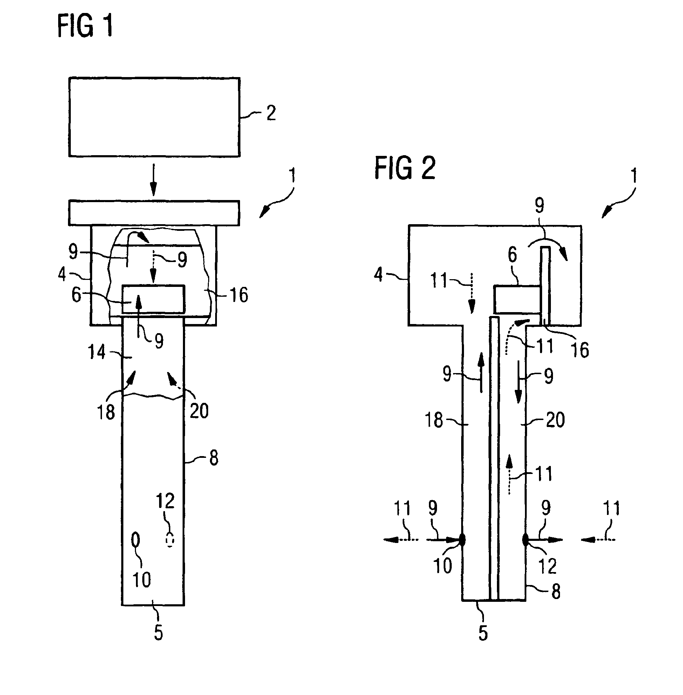

Figur 1 zeigt schematisch einen beispielhaften Aufbau einer Einrichtung 1 mit einem Sensor 6 zur Bestimmung von einem oder mehreren Bestandteilen eines in einem Installationskanal strömenden Mediums. Je nach Anwendung kann Installationskanal Teil einer Heizungs-, Lüftungs- und Klimaanlage, einer Verbrennungsanlage, einer chemischen Prozessanlage und einer Wasseraufbereitungsanlage sein. In einem Ausführungsbeispiel ist das Medium gasförmig und der Sensor 6 ein Gassensor. Wie in Figur 1 angedeutet kann ein Modul 2 an der Einrichtung 1 befestigt werden, das unter anderem zur Verarbeitung von Signalen dient, die von der Einrichtung 1 generiert werden.

Die Einrichtung 1 hat ein Gehäuse 4 und einen damit verbundenen Hauptkanal 8. An einem dem Gehäuse 4 abgewandten Ende 5 ist der Hauptkanal 8 geschlossen. Der Hauptkanal 8 hat einen ersten Kanal 18 und einen zweiten Kanal 20, der durch eine Trennwand 14 vom ersten Kanal 18 getrennt ist. Der Hauptkanal 8 hat ausserdem mindestens eine vom Ende 5 entfernte Öffnung 10, die eine Verbindung zwischen dem Kanal 18 und dem Installationskanal schafft, und mindestens eine vom Ende 5 entfernte Öffnung 12, die eine Verbindung zwischen dem Kanal 20 und dem Installationskanal schafft. Das Medium strömt somit, wie im folgenden erläutert ist, zwischen den Öffnungen 10, 12, durch die Kanäle 18, 20 und am Sensor 6 vorbei.

In einem Ausführungsbeispiel ist der Hauptkanal 8 ein Rohr, das beispielsweise einen Durchmesser von ca. 10 mm bis ca. 20 mm, und beispielsweise eine Länge von ca. 5 cm bis ca. 30 cm hat. Der Fachmann erkennt jedoch, dass diese Abmessungen je nach Anwendung gewählt werden, und dass die so gewählten Abmessungen von den für den Durchmesser und die Länge genannten Werte abweichen können. Zusätzlich erkennt der Fachmann, dass der Hauptkanal 8 nicht notwendigerweise als Rohr ausgeführt sein muss. Generell kann der Hauptkanal 8 als Hohlkörper, der sich entlang einer Längsachse erstreckt, ausgeführt sein. Solch ein Hohlkörper kann einen kreisförmigen oder davon abweichenden Querschnitt haben. Ausserdem kann die Längsachse je nach Anwendungsgebiet geradlinig oder gekrümmt sein.

Zum besseren Verständnis ist in Figur 1 das Gehäuse 4 und der Hauptkanal 8 mit ausgebrochenen Seitenteilen gezeigt, so dass der Sensor 6 und die Trennwand 14 sichtbar sind. Der Sensor 6 ist im gezeigten Ausführungsbeispiel auf einer ebenfalls sichtbaren Leiterplatte 16 befestigt. Aus der Leiterplatte 16 sind zusätzliche elektronische Schaltungen vorhanden, die jedoch in Figur 1 nicht dargestellt sind. Zudem ist beispielhaft ein durch Pfeile 9 angedeuteter Strömungsverlauf angedeutet. In einer Zuflussrichtung führt der Strömungsverlauf vom Kanal 18 kommend am Sensor 6 und an einer Vorderseite der Leiterplatte 16 vorbei. In einer Abflussrichtung führt der Strömungsverlauf an einer Rückseite der Leiterplatte 16 vorbei in den Kanal 20 und aus dem Kanal 20 heraus.

Das Gehäuse 4 ist geschlossen und gasdicht verschlossen. Das bedeutet unter anderem, dass vorhandene Kabeldurchführungen entsprechend abgedichtet sind, um aussagefähige Messungen durch den Sensor 6 zu erzielen. In einem Ausführungsbeispiel ist das Gehäuse 4 an einer dem Hauptkanal 8 gegenüberliegenden Seite durch eine passgenau eingefügte Leiterplatte und einer Dichtung verschlossen. Diese Leiterplatte stellt in einem Ausführungsbeispiel die elektrische Verbindung mit dem in Figur 1 gezeigten Modul 2 dar.

Während das gasförmige Medium, z. B. Luft, ein Gas (CO₂, CO, NO etc.) oder ein Gas-Luft Gemisch, am Sensor 6 vorbei strömt kommt es am Sensor 6 zu einer Wechselwirkung mit dem Medium. Aufgrund der Wechselwirkung erzeugt der Sensor 6 ein Signal, das z. B. das Modul 2 weiterverarbeitet.

In einem Ausführungsbeispiel ist der Sensor 6 ein Gassensor. Der Gassensor kann in einem Ausführungsbeispiel ein photoakustischer Gassensor sein, der z. B. in DE 19516974 beschrieben ist und zur Bestimmung, ob z. B. CO₂, CO oder NO in einem Raum vorhanden sind, dient. Der Gassensor hat eine Messkammer, in der sich das zu bestimmende Medium befindet. Ein Steuergerät steuert eine Lichtquelle, um in der Messkammer vorhandene Gasmoleküle periodisch anzuregen. Ein Mikrofon detektiert die von den Gasmolekülen ausgehenden Druckschwankungen und erzeugt ein elektrisches Signal, das anzeigt, ob ein bestimmtes Gas vorhanden ist und evtl. wie hoch dessen Konzentration ist. Eine mit dem Sensor 6 verbundene Kontroll- und Regeleinrichtung benutzt dieses Signal, um den Betrieb der Heizungs-, Lüftungs- oder Klimaanlage zu überprüfen und evtl. entsprechend zu regeln.

Figur 2 illustriert beispielhaft den bereits in Figur 1 angedeuteten Strömungsverlauf innerhalb der Einrichtung 1 in einer Seitenansicht. Die Seitenwand 14 trennt wie erwähnt den Kanal 18 und den Kanal 20. Die Pfeile 9 deuten den Strömungsverlauf an, der entsteht, wenn das Medium durch die Öffnung 10 in den Kanal 18 tritt und dann am Sensor 6 und der Leiterplatte 16 vorbei strömt, um anschliessend durch den Kanal 20 und die Öffnung 12 auszutreten.

Der Strömungsverlauf innerhalb der Einrichtung 1 ist umkehrbar. Pfeile 11 deuten einen zweiten Strömungsverlauf an, der entgegen dem durch die Pfeile 9 angedeuteten ersten Strömungsverlauf ist. Der zweite Strömungsverlauf entsteht, wenn das Medium durch die Öffnung 12 in den Kanal 18 eintritt und aus der Öffnung 12 austritt.

Konstruktive Massnahmen innerhalb des Gehäuses 4 tragen dazu bei, dass der gewünschte Strömungsverlauf vorbei am Sensor 6 erzielt wird. Wie in Figur 2 angedeutet ist der Sensor 6 so positioniert, dass eine Vorderseite des Sensors 6 in etwa mit einer Ebene der Trennwand 14 abschliesst. Die Vorderseite ist zudem nahe an einem Ende der Trennwand 14 positioniert und kann in einem Ausführungsbeispiel das Ende berühren. Zusätzlich können Schienen, Nuten und Erhöhungen vorhanden sein, um den Sensor 6 und die Leiterplatte 16 zu positionieren. Dadurch kann der gewünschte Strömungsverlauf erzielt werden und unerwünschte Strömungsverläufe innerhalb des Gehäuses 4 können reduziert oder ganz vermieden werden.

Alternativ zu dem in Figuren 1 und 2 gezeigten Ausführungsbeispiel kann der Sensor 6 auch an der dem Rohr 8 gegenüberliegenden Gehäusewand positioniert sein. In diesem Fall trifft das im ersten Kanal 18 geführte Medium beispielsweise in etwa senkrecht auf den Sensor 6, um dann durch den im zweiten Kanal 20 herrschenden Unterdruck abgeführt zu werden.

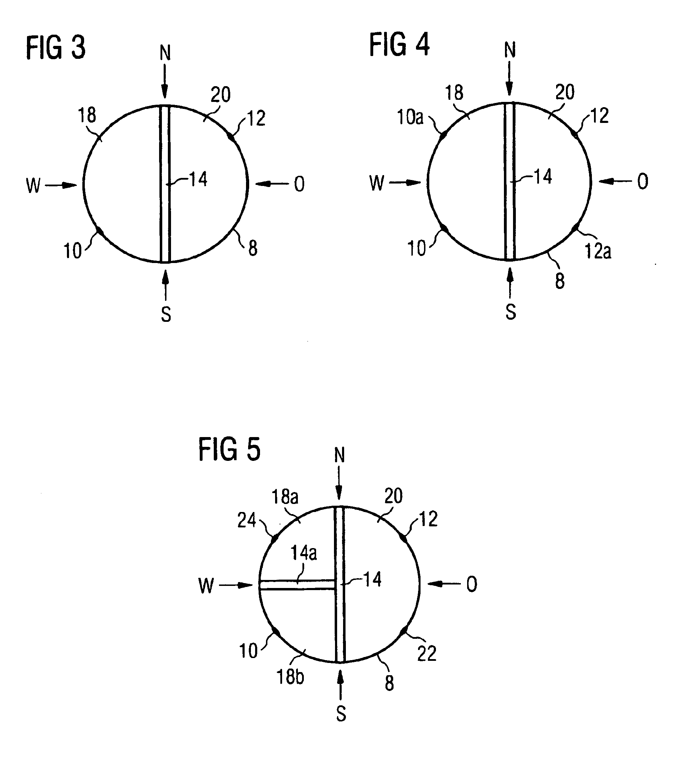

Figur 3 zeigt schematisch einen Querschnitt durch ein Beispiel (nicht Teil der Vorliegenden Erfindung) eines Hauptkanals 8 der Einrichtung 1 in Höhe der Öffnungen 10, 12. Die Trennwand 14 trennt die beiden Kanäle 18, 20. Bezüglich der Trennwand 14 sind die Öffnungen 10, 12 unsymmetrisch angeordnet.

Im in Figur 3 gezeigten Beispiel (nicht Teil der Vorliegenden Erfindung) ist der Hauptkanal 8 ein Rohr mit einem kreisförmigen Querschnitt. Im allgemeinen kann jedoch auch ein Rohr mit einem nicht kreisförmigen Querschnitt verwendet werden. Im gezeigten Ausführungsbeispiel befinden sich ausserdem die Öffnungen 10, 12 in gleicher Höhe und sind etwa 10 mm bis 40 mm vom Rohrende entfernt. Die Öffnungen 10, 12 können sich jedoch auch auf ungleicher Höhe befinden. Zudem trennt die Trennwand 14 im gezeigten Ausführungsbeispiel die Kanäle 18, 20 in etwa gleich grosse Kanäle. In einem anderen Ausführungsbeispiel können die Kanäle 18, 20 jedoch auch unterschiedlich grosse Kanäle sein.

In einem Beispiel (nicht Teil der Vorliegenden Erfindung) ist jede Öffnung 10, 12 eine kreisrunde Öffnung mit einem Durchmesser von ca. 1 bis ca. 5 mm. Alternativ dazu können die Öffnungen 10, 12 beispielsweise als Ovale, als Schlitze (z. B. quer zur Längsachse des Rohres 8) oder als mehrere benachbarte Öffnungen ausgebildet sein. Im letztgenannten Fall bildet eine Gruppe von benachbarten (z. B. kleinen) Öffnungen eine oder beide der Öffnungen 10, 12. Es ist auch eine Kombination von verschiedenen Ausgestaltungen der Öffnungen möglich. So können z. B. die Öffnungen 10, 12 als kreisrunde Öffnungen mit unterschiedlichen Durchmessern ausgebildet sein. Zudem kann beispielsweise die Öffnung 10 als kreisrunde Öffnung ausgebildet sein, und die Öffnung 12 als Schlitz.

Das Gehäuse 4 und der Hauptkanal 8 sind in einem Ausführungsbeispiel in einem Stück. Zur Herstellung können herkömmliche Herstellungsverfahren benutzt werden, beispielsweise ein Guss- oder Spritzgussverfahren. Das Material für das Gehäuse 4 und den Hauptkanal 8 kann prinzipiell jedes für diese Verfahren geeignete Material sein, beispielsweise Plastik oder plastikartige Materialien, wie z. B. ABS (Acrylonitrile Butadiene Styrene), PPS (Polyphenylene sulfide), PVC, PP (Polypropylen), PE (Polyethylen), oder ähnliche. Ausserdem kann das Material so gewählt werden, dass sich ein starrer oder flexibler Hauptkanal 8 ergibt. In einem anderen Ausführungsbeispiel können das Gehäuse 4 und der Hauptkanal 8 getrennte Teile sein, die aus den gleichen oder verschiedenen Materialien (z. B. Metal) gefertigt sind.

Figur 3 zeigt zusätzlich die vier Himmelsrichtungen N, S, W, O, um die geringe Richtungsabhängigkeit der Einrichtung 1 zu erläutern. Für die folgenden theoretischen Erläuterungen (wie auch bzgl. Figuren 4 und 5) ist angenommen, dass der Hauptkanal 8 fest steht und sich vom Hauptkanal 8 aus betrachtet die Strömungsrichtung ändert. Der Fachmann erkennt jedoch, dass in der Praxis die Ausrichtung des Hauptkanals 8 variabel ist, weil z. B. der Hauptkanal 8 beim Einbau verdreht wird, während die Strömungsrichtung durch den Installations- oder Lüftungskanal festgelegt ist und sich in der Regel nicht ändert.

Kommt die Strömung aus Norden, Osten oder einer dazwischen liegenden Richtung (N-O) herrscht an der Öffnung 12 ein höherer Druck als an der Öffnung 10 und das Medium strömt durch die Öffnung 12 in den Kanal 20. Wenn die Strömung aus Süden, Westen oder einer dazwischen liegenden Richtung kommt, herrscht an der Öffnung 10 ein höherer Druck als an der Öffnung 12 und das Medium strömt durch die Öffnung 10 in den Kanal 18.

Kommt die Strömung aus den Richtungen Ost-Süd oder Nord-West kommt es zu einem Umschalten der Druckverhältnisse. Der höhere Druck an der Öffnung 12 herrscht auch in Ost-Süd Richtung vor bis es in Richtung Süden zu einem Umschlag kommt und der Druck an der Öffnung 10 höher wird. Das Medium strömt dann durch die Öffnung 10 in den Kanal 18. Ähnliches gilt, wenn die Strömung von Nord kommend nach Westen wandert. Der höhere Druck an der Öffnung 12 herrscht auch noch in Nord-West Richtung vor bis es in Richtung Westen zu einem Umschlag kommt und der Druck an der Öffnung 10 höher wird. Das Medium strömt dann durch die Öffnung 10 in den Kanal 18.

Die beschriebene Anordnung der Öffnungen 10, 12 trägt dazu bei, dass keine exakte Ausrichtung der Einrichtung 1 hinsichtlich der Strömung in einem Installations- oder Lüftungskanal mehr erforderlich ist. In einem weiten Winkelbereich ist die Einrichtung 1 unabhängig davon, wie der Hauptkanal 8 im Installations- oder Lüftungskanal ausgerichtet ist.

Figur 4 zeigt schematisch einen Querschnitt durch ein Beispiel (nicht Teil der vorliegenden Erfindung) eines Hauptkanals 8 der Einrichtung 1. Zusätzlich zu den bereits in Figur 3 gezeigten und erläuterten Merkmalen hat der Hauptkanal 8 gemäss Figur 4 zwei zusätzliche Öffnungen 10a, 12a. Die Öffnungen 10, 10a schaffen eine Verbindung zwischen dem Kanal 18 und dem Installationskanal, und die Öffnungen 12, 12a schaffen eine Verbindung zwischen dem Kanal 20 und dem Installationskanal. In dem gezeigten Ausführungsbeispiel sind die Öffnungen 10, 10a auf etwa gleicher Höhe durch eine vorbestimmte Distanz voneinander entfernt. Dies gilt auch für die Öffnungen 12, 12a. In diesem Ausführungsbeispiel sind die Öffnungen 10, 10a, 12, 12a spiegelsymmetrisch zur Trennwand 14.

Der Strömungsverlauf in Figur 4 ist ähnlich wie in Figur 3, so dass das hinsichtlich Figur 3 erläuterte prinzipiell auch auf Figur 4 zutrifft. Die pro Kanal 18, 20 zusätzliche Öffnung 10a, 12a optimiert die Funktion der Einrichtung 1 für den Fall, dass die Strömung aus Süd-Ost oder Nord-West kommt.

Figur 5 zeigt schematisch einen Querschnitt durch den Hauptkanal 8 gemäss einem Ausführungsbeispiel. Wie in Figur 3 trennt die Trennwand 14 den zweiten Kanal 20 ab. Eine zusätzliche Trennwand 14a teilt den ersten Kanal in einen Teilkanal 18a und einen Teilkanal 18b. Insgesamt gibt es daher drei Kanäle 18a, 18b, 20 im Hauptkanal 8. Vom Installations- oder Lüftungskanal aus betrachtet führt die Öffnung 10 in den Teilkanal 18b, die Öffnung 24 in den Teilkanal 18a, und die Öffnungen 12, 22 in den Kanal 20.

Der Hauptkanal 8 gemäss dem in Figur 5 gezeigten Ausführungsbeispiel steht wie in Figur 2 gezeigt vom Gehäuse 4 ab. Innerhalb des Gehäuses 4 ist der Sensor 6 in einem Ausführungsbeispiel ähnlich wie in Figur 2 angeordnet. Die Strömung fliesst daher ebenfalls am Sensor 6 vorbei, so dass die Wechselwirkung Sensor-Medium erfolgen kann. In Zuflussrichtung trifft die Strömung aus mindestens einem der Kanäle 18a, 18b, 20 kommend auf den Sensor 6.

Figur 5 zeigt ebenfalls die vier Himmelsrichtungen N, S, W, O, um die geringe Richtungsabhängigkeit der Einrichtung 1 zu erläutern. Kommt die Strömung aus Norden herrscht an den Öffnungen 12, 24 ein höherer Druck als an den Öffnungen 10, 22, und das Medium strömt durch die Öffnung 12 in den Kanal 20 und durch die Öffnung 24 in den Teilkanal 18a. Das Medium fliesst durch den Teilkanal 18b ab. Ändert sich die Strömungsrichtung im Verlauf von Norden nach Süden ändern sich die Druckverhältnisse, so dass anfangs der Druck an der Öffnung 12 am grössten ist, dann an den beiden Öffnungen 12, 22 und schliesslich an der Öffnung 22. Bei diesen Druckverhältnissen fliesst das Medium durch den Kanal 20 in Richtung des Sensors 6. Das Medium fliesst im wesentlichen durch beide Teilkanäle 18a, 18b ab.

Kommt die Strömung aus Süden herrscht an den Öffnungen 10, 22 ein höherer Druck als an den Öffnungen 12, 24, und das Medium strömt durch die Öffnung 10 in den Teilkanal 18b und durch die Öffnung 22 in den Kanal 20. Das Medium fliesst durch den Teilkanal 18a ab. Ändert sich die Strömungsrichtung im Verlauf von Süden nach Norden ändern sich die Druckverhältnisse, so dass anfangs der Druck an der Öffnung 10 am grössten ist, dann an den beiden Öffnungen 10, 24 und schliesslich an der Öffnung 24. Bei diesen Druckverhältnissen fliesst das Medium anfangs durch den Teilkanal 18b in Richtung auf den Sensor 6, dann durch beide Teilkanäle 18a, 18b und schliesslich durch den Teilkanal 18a. Das Medium fliesst im wesentlichen durch den Kanal 20 ab.

Die erläuterten Druckverhältnisse können experimentell optimiert werden. So kann z. B. die Form, Grösse, oder eine Kombination aus Form und Grösse, der Öffnungen 10, 10a, 12, 12a, 22, 24 angepasst werden, um einen bestimmten Winkelbereich abzudecken.

## Patentansprüche

1. Einrichtung (1) mit mindestens einem Sensor (6) zur Bestimmung von einem oder mehreren Bestandteilen eines in einem Installationskanal strömenden Mediums, die ein Gehäuse (4) und einen damit verbundenen Hauptkanal (8) hat, der an einem dem Gehäuse (4) abgewandten Ende (5) geschlossen ist, der einen ersten Kanal (18) hat, und der einen zweiten Kanal (20) hat, der durch eine erste Trennwand (14) vom ersten Kanal (18) getrennt ist, wobei der Hauptkanal (8) mindestens eine vom Ende (5) entfernte erste Öffnung (10) hat, die eine erste Verbindung zwischen dem ersten Kanal (18) und dem Installationskanal schafft, und mindestens eine zweite vom Ende (5) entfernte Öffnung (12) hat, die eine erste Verbindung zwischen dem zweiten Kanal (20) und dem Installationskanal schafft, so dass das Medium zwischen den Öffnungen (10, 12), durch die Kanäle (18, 20) und am Sensor (6) vorbei strömt, **dadurch gekennzeichnet,**
**dass** eine zweite Trennwand (14a) den ersten Kanal (18) in einen ersten Teilkanal (18a) und einen zweiten Teilkanal (18b) trennt, wobei jedem Teilkanal (18a, 18b) eine vom Ende (5) entfernte Öffnung (10, 24) zugeordnet ist, und wobei jede Öffnung (10, 24) eines Teilkanals (18a, 18b) eine Verbindung zwischen dem jeweiligen Teilkanal (18a, 18b) und dem Installationskanal schafft.

2. Einrichtung nach Anspruch 1, wobei die Öffnungen (10, 12) unsymmetrisch bezüglich der Trennwand (14) angeordnet sind.

3. Einrichtung nach Anspruch 1 oder 2, wobei die Kanäle (18, 20) im wesentlichen gleich gross sind.

4. Einrichtung nach Anspruch 4 oder 5, wobei die Teilkanäle (18a, 18b) im wesentlichen gleich gross sind.

5. Einrichtung nach Anspruch 5 oder 6, wobei der zweite Kanal (20) zwei Öffnungen (12, 22) hat.

6. Einrichtung nach Anspruch 1, wobei der Hauptkanal (8) eine dritte vom Ende (5) entfernte Öffnung (10a) hat, die eine zweite Verbindung zwischen dem ersten Kanal (18) und dem Installationskanal schafft, und eine vierte vom Ende (5) entfernte Öffnung (12a) hat, die eine zweite Verbindung zwischen dem zweiten Kanal (20) und dem Installationskanal schafft.

7. Einrichtung nach einem der vorhergehenden Ansprüche, wobei die Öffnungen (10, 10a, 12, 12a, 22, 24) kreisförmig, oval oder schlitzförmig sind.

8. Einrichtung nach einem der vorhergehenden Ansprüche, wobei alle Öffnungen (10, 10a, 12, 12a, 22, 24) einen etwa gleichen Abstand vom Ende (5) haben.

## Claims

1. A device (1) with at least one sensor (6) for determining one or more constituents of a medium flowing in an installation duct, which device has a housing (4) and a main channel (8), which is connected to said housing, is closed at an end (5) remote from the housing (4) and has a first channel (18) and a second channel (20), which is separated from the first channel (18) by a first separating wall (14), the main channel (8) having at least one first opening (10), which is away from the end (5) and creates a first connection between the first channel (18) and the installation duct, and at least one second opening (12), which is away from the end (5) and creates a second connection between the second channel (20) and the installation duct, so that the medium flows between the openings (10, 12), through the channels (18, 20) and past the sensor (6), **characterized in that** a second separating wall (14a) separates the first channel (18) into a first subchannel (18a) and a second subchannel (18b), each subchannel (18a, 18b) being assigned an opening (10, 24) away from the end (5), and each opening (10, 24) of a subchannel (18a, 18b) creating a connection between the respective subchannel (18a, 18b) and the installation duct.

2. Device according to Claim 1, the openings (10, 12) being arranged unsymmetrically with respect to the separating wall (14).

3. Device according to Claim 1 or 2, the channels (18, 20) being of substantially the same size.

4. Device according to Claim 4 or 5, the subchannels (18a, 18b) being of substantially the same size.

5. Device according to Claim 5 or 6, the second channel (20) having two openings (12,22).

6. Device according to Claim 1, the main channel (8) having a third opening (10a), which is away from the end (5) and creates a second connection between the first channel (18) and the installation duct, and a fourth opening (12a), which is away from the end (5) and creates a second connection between the second channel (20) and the installation duct.

7. Device according to one of the preceding claims, the openings (10, 10a, 12, 12a, 22, 24) being circular, oval or slit-shaped.

8. Device according to one of the preceding claims, all the openings (10, 10a, 12, 12a, 22, 24) being at approximately the same distance from the end (5).

## Revendications

1. Appareil (1) comprenant au moins un capteur (6) destiné à déterminer un ou plusieurs composants d'un fluide circulant dans un conduit d'installation, qui présente un boîtier (4) et un conduit principal (8) relié à ce boîtier, qui est fermé sur une extrémité (5) opposée au boîtier (4), qui a un premier conduit (18), et qui a un second conduit (20), lequel est séparé du premier conduit (18) par une première cloison de séparation (14), le conduit principal (8) ayant au moins une première ouverture (10) éloignée de l'extrémité (5), qui crée une première liaison entre le premier conduit (18) et le conduit d'installation, et au moins une seconde ouverture (12) éloignée de l'extrémité (5), qui crée une première liaison entre le second conduit (20) et le conduit d'installation, de sorte que le fluide circule entre les ouvertures (10, 12), traverse les conduits (18, 20) et passe devant un capteur (6),
**caractérisé en ce que**
une seconde paroi de séparation (14a) sépare le premier conduit (18) en un premier conduit partiel (18a) et un second conduit partiel (18b), une ouverture (10, 24) éloignée de l'extrémité (5) étant attribuée à chaque conduit partiel (18a, 18b) et chaque ouverture (10,24) d'un conduit partiel (18a, 18b) créant une liaison entre le conduit partiel (18a, 18b) respectif et le conduit d'installation.

2. Appareil selon la revendication 1, les ouvertures (10, 12) étant disposées de façon dissymétrique par rapport à la paroi de séparation (14).

3. Appareil selon la revendication 1 ou 2, les conduits (18, 20) étant sensiblement de même grandeur.

4. Appareil selon la revendication 4 ou 5, les conduits partiels (18a, 18b) étant sensiblement de même grandeur.

5. Appareil selon la revendication 5 ou 6, le second conduit (20) ayant deux ouvertures (12, 22).

6. Appareil selon la revendication 1, le conduit principal (8) ayant une troisième ouverture (10a) éloignée de l'extrémité (5), qui crée une seconde liaison entre le premier conduit (18) et le conduit d'installation, et a une quatrième ouverture (12a) éloignée de l'extrémité (5), qui crée une seconde liaison entre le second canal (20) et le conduit d'installation.

7. Appareil selon l'une quelconque des revendications précédentes, les ouvertures (10, 10a, 12, 12a, 22, 24) ayant une forme circulaire, ovale ou une forme de fente.

8. Appareil selon l'une quelconque des revendications précédentes, toutes les ouvertures (10, 10a, 12, 12a, 22, 24) ayant une distance à peu près identique de l'extrémité (5).
